# EUROPEAN PATENT SPECIFICATION

(11) **EP 2 691 233 B1**
(45) Date of publication and mention of the grant of the patent: **23.08.2017**
(21) Application number: 12709346.6
(22) Date of filing: 21.03.2012
(51) Int. Cl.: B32B 27/08, B32B 27/34, B32B 27/36, C08L 77/02, C08L 67/02, B32B 27/28, B32B 27/32

(54) **MULTILAYER HEAT-SHRINKABLE ASYMMETRICAL FILM**
MEHRSCHICHTIGER WÄRMESCHRUMPFBARER ASYMMETRISCHER FILM
FILM ASYMÉTRIQUE THERMORÉTRACTABLE MULTICOUCHE

(30) Priority: 29.03.2011 EP 11160111
(43) Date of publication of application: 05.02.2014
(73) Proprietor: Cryovac, Inc., Duncan, South Carolina 29334 (US)
(72) Inventor: FORLONI, Roberto, I-20017 Rho (MI) (IT)
(74) Representative: Fraire, Cristina
(86) International application number: PCT/EP2012/055036
(87) International publication number: WO 2012/130699

(56) References cited:
- EP-A1- 0 597 363
- US-A- 4 659 599
- US-A1- 2010 003 432

## Description

### Technical Field

The present invention relates to a multilayer, heat-shrinkable, asymmetrical film and to a product packaged therewith.

In particular, the present invention relates to a coextruded multilayer, gas barrier, heat shrinkable oriented film characterized by an absent or minimal curling and by a significantly reduced skeleton breakage, particularly suitable for inside cut applications.

### Background Art

Heat-shrinkable, gas barrier, thermoplastic films have found many useful applications in the packaging industry for food products (meat, cheese, poultry, etc.).

Thermoplastic films, and especially polyolefin materials, have been used in the past to package various articles including perishable food products which require protection from the environment, resistance to physical and environmental abuse during storage and distribution, and an aesthetic and attractive appearance. Optical properties such as high gloss, high clarity, and low haze contribute to the aesthetic consumer appeal of products wrapped in such packaging materials. Abuse resistance properties are important to package integrity and, for perishable food products, are essential to the viability of the packaged product.

Oxygen barrier characteristics are required to provide extended shelf life for the packaged product in the case of food items, and various materials have been used to provide lower gas permeability and thereby reduce the oxygen transmission of the film.

A shrink feature may be imparted to a thermoplastic film by orientation of the film during its manufacture. This shrink feature allows the film to shrink or, if restrained as in tray lidding applications, create shrink tension within the packaging film upon exposure to heat, for example, in a hot water bath or by exposure to hot air. In a typical process, manufactured film is stretched in either the machine direction or perpendicular to the machine direction, or both, i.e., in the longitudinal and transverse directions respectively, in varying degrees to impart a desired degree of shrinkability to the film upon subsequent heating. After this stretching operation, the film is rapidly cooled to impart this latent shrinkability to the resulting film. Shrinkable film provides a tight, smooth appearance to a product wrapped in such film, as well as some added toughness in order to protect the packaged product from abuse.

Packaging films with a more-or-less satisfactory balance of the above properties are known in the literature and spread in the market.

A problem that is however often found with the available asymmetrical films is that of "curling" which may affect machinability of shrink packaging films.

Barrier shrink packaging films are used, for example, in automated machine packaging. A film is said to have good machinability if it can be used with a packaging machine without undue creasing, folding, seal pleats, edge curls, or jamming. An attribute of a film that may contribute to good machinability is a higher level of stiffness of the film. However, an increase in the modulus (i.e., stiffness) of a film may result in undesirably reduced free shrink and appearance characteristics (e.g. gloss, haze, and total transmission of the film).

As a matter of facts, in asymmetrical structures, the greater membrane tension exerted by the layer with higher Young's modulus, causes curling of the layered structure. This is undesired from both a mechanical and an aesthetical point of view.

Moreover, an unbalanced membrane tension gives rise to skeleton breakage issues. The skeleton is the remaining portion of the film after the usable portions have been cut away during i.e. tray lidding and its breakage negatively affects the machinability of the film and the overall productivity of the packaging process because of difficult or discontinuous winding of the skeleton.

The curling problem is particularly relevant in tray lidding applications, in particular with lidding machines of the inside cut type. In these machines, in fact, the film is cut before being welded, thus if the curling effect occurs, it is very likely to obtain an unsuccessful welding with obvious significant drawbacks.

In the known multi-layer heat-shrinking films comprising a gas barrier layer, which is usually made up of vinyl-vinylidene chloride copolymers (PVDC), polyamides, or ethylene vinyl alcohol (EVOH), and external layers, which are generally made up of polyolefins, in order to reduce the curling, it is necessary to position the gas barrier layer in the centre of the layered structure. As a matter of fact, this gas barrier layer is normally made up of a polymer with a high Young's modulus, whereas the polymers making up the other layers are made up of low modulus polymers.

However, positioning the barrier layer in the centre of the layered structure, does not eliminate curling phenomena.

In some cases a selective crosslinking technique has been used in order to avoid curling and to solve welding problems caused by different melting temperatures of the barrier layer compared to the remaining layers. However, it gives rise to serious problems related to recyclability of the polymers forming the film. As a matter of fact, this technique makes the polymer partly unmeltable.

EP 1 636 029 discloses a film comprising seven overlaid layers constituted by non-crosslinked thermoplastic polymers of different natures, wherein the material that constitutes one of the outer layers melts at a lower temperature than the materials that constitute the other layers. It also includes three layers constituted by polymers having a Young's modulus substantially higher than that of the polymers which constitute the other layers. Said film is characterised in that one of said three layers with a higher Young's modulus is on the outside of the film, whereas the other two layers with a higher Young's modulus are on the inside of the film. Moreover, each of said three layers with a higher Young's modulus is separated from the other layers with a higher Young's modulus by at least one layer with a lower Young's modulus. This film has an outer barrier layer consisting of a polyamide polymer selected from polyamide 6 or polyamide 6/66.

EP 0 720 910 discloses a multilayer structure comprising polyamide layers wherein at least two of the polyamide layers comprise a blend of crystalline polyamide and a material which disrupt the crystallinity of the crystalline polyamide and wherein a layer of a material having a lower modulus than that of the crystalline polyamide is positioned between said polyamide layers.

US 4,486,507 discloses heat-shrinkable films comprising at least one layer of a composition of 10-85% wt. of a linear (co)polyamide and 15-90% wt. of a partially aromatic (co)polyamide. US 2010/0003432 discloses a multilayer heat-shrinkable film for packaging applications, manufactured by a triple bubble process and comprising in order a sealing layer of a polyolefin, preferably of polyethylene, an adhesive layer, a barrier layer of an ethylene vinyl alcohol copolymer (EVOH) sandwiched between two layers of a polyamide such as polyamide 6, an adhesive layer, another layer of a polyolefin, an adhesive layer, and a skin layer of a polyester, in particular of polyethylene terephthalate (PET). Said skin layer may alternatively be of another polymer such as a polyamide. It is mentioned that this film may be designed such that the curling tendency is minimized.

It is an object of the present invention to provide a multilayer heat-shrinkable asymmetrical film with a good balance of shrink properties, optical properties, and mechanical properties and which is free from the above mentioned curling, skeleton breakage drawbacks and recycling problems.

### Summary of invention

In a first aspect, the present invention relates to a multilayer heat-shrinkable asymmetrical film as defined in claim 1, said film consisting of the following layers:
- an outer sealing layer;
- a tie layer;
- an inner barrier layer comprising EVOH sandwiched between two polyamide layers;
- a tie layer; and
- an outer skin layer comprising at least 50% by weight of a blend of between 90% to 60% by weight of at least one polyamide and between 10% to 40% by weight of at least one polyester.

The film of the present invention not only overcomes the problem of the skeleton breakage and curling phenomena, by reducing internal tension, but has also improved mechanical and thermal resistance, as well as improved machinability which make it usable in a wide range of lidding machine.

Moreover, the film of the present invention has a wide sealing range.

In a preferred embodiment, the present invention relates to a multilayer heat-shrinkable asymmetrical film comprising at least the above layers manufactured according to a triple bubble process.

In a second aspect, the present invention relates to a product packaged with the above film wherein the outer sealing layer is in contact with the packaged product.

In a further aspect, the present invention relates to the use of the heat-shrinkable asymmetrical film in tray lidding applications.

### DEFINITIONS

As used herein, the term "film" refers to a flat or tubular flexible structure of thermoplastic material having a thickness up to about 150 µm.

As used herein, the term "heat-shrinkable" refers to a film which shrinks by 2 - 40% of its original dimensions, in at least one of the longitudinal and transverse directions, when heated to 120°C for 4 seconds. The quantitative determination is carried out according to ASTM D 2732, as set forth in the 1990 Annual Book of ASTM Standards, Vol. 08.02, pp. 368-371.

As used herein, the phrase "longitudinal direction" or "machine direction" (MD) refers to a direction "along the length" of the film, i.e., in the direction of the film as the film is formed during extrusion and/or coating.

As used herein, the phrase "transverse direction" (TD) refers to a direction across the film, perpendicular to the machine direction;

As used herein, the phrase "outer layer" refers to any film layer having only one of its principal surfaces directly adhered to another layer of the film;

As used herein, the phrases "sealing-layer", "heat-sealable layer" and "heat sealing layer" refer to the outer film layer involved in the sealing of the film;

As used herein, the phrase "skin layer" and "abuse-resistant layer" refer to the outside layer of the film which is not the sealant layer and which is subject to abuse;

As used herein, the phrases "inner layer", "intermediate layer", and "internal layer" refer to any film layer having both of its principal surfaces directly adhered to another layer of the film;

As used herein, the phrase "tie layer" refers to any internal layer having the primary purpose of adhering two layers to one another;

As used herein, the term "core", and the phrase "core layer" refer to any internal layer which preferably has a function other than serving as a tie or compatibilizer for adhering two layers to one another;

As used herein, the term "barrier", and the phrase "barrier layer", as applied to films and/or layers, are used with reference to the ability of a film or layer to serve as a barrier to gases;

As used herein, the term "bulk layer" or "structural" layer refers to a layer generally used to improve the abuse or puncture resistance of the film or just to provide the desired thickness.

As used herein, the phrase "directly adhered", as applied to film layers, is defined as adhesion of the subject film layer to the object film layer, without a tie layer, adhesive, or other layer there-between. In contrast, as used herein, the word "between", as applied to a film layer expressed as being between two other specific layers, includes both direct adherence of the subject layer between to the two other layers it is between, as well as a lack of direct adherence to either or both of the two other layers the subject layer is between, i.e., one or more additional layers can be imposed between the subject layer and one or more of the layers the subject layer is between.

As used herein, the term "homopolymer" is used with reference to a polymer resulting from the polymerization of a single monomer, i.e., a polymer consisting essentially of a single type of repeating unit.

As used herein, the term "copolymer" refers to polymers formed by the polymerization reaction of at least two different monomers.

As used herein, the term "polymer" refers to both homo-polymers and co-polymers as defined above.

As used herein, the term "polyolefin" is used with reference to any thermoplastic polymer of simple olefins such as ethylene, propylene, and butene, and co-polymer comprising a major proportion of a simple olefin and a minor proportion of one or more comonomers copolymerisable therewith such as typically another olefin, vinyl acetate, alkyl (meth)acrylate, (meth)acrylic acid, maleic anhydride, and the like, as well as modifications thereof. The term "polyolefin" specifically includes polyethylene, ethylene co-and ter-polymers, polybutene, propylene-butene co-polymer, and the like.

As used herein the terms "polyethylene" and "ethylene homopolymer" identify polymers consisting essentially of an ethylene repeating unit. Depending on the polymerization process employed, polymers with a different degree of branching and a different density can be obtained. Those characterized by a low degree of branching and showing a density higher than 0.940 g/cm³ are called HDPE while those with a higher level of branching and a density up to 0.940 g/cm³ are called LDPE.

As used herein the term "ethylene copolymer" refers to the copolymers of ethylene with one or more other olefins and/or with a non-olefinic comonomer copolymerizable with ethylene, such as vinyl monomers, modified polymers thereof, and the like. Specific examples include ethylene/α-olefin copolymers, ethylene/vinyl acetate copolymers, ethylene/ethyl acrylate copolymers, ethylene/butyl acrylate copolymers, ethylene/methyl acrylate copolymers, ethylene/acrylic acid copolymers, ethylene/methacrylic acid copolymers, ionomer resins, ethylene/alkyl acrylate/maleic anhydride ter-polymers, etc..

As used herein, the phrase "heterogeneous polymer" refers to polymerization reaction products of relatively wide variation in molecular weight and relatively wide variation in composition distribution, i.e., polymers made, for example, using conventional Ziegler-Natta catalysts. Such polymers typically contain a relatively wide variety of chain lengths and comonomer percentages.

As used herein, the phrase "homogeneous polymer" refers to polymerization reaction products of relatively narrow molecular weight distribution and relatively narrow composition distribution. Homogeneous polymers exhibit a relatively even sequencing of comonomers within a chain, the mirroring of sequence distribution in all chains, and the similarity of length of all chains, and are typically prepared using metallocene, or other single-site type catalysis.

More particularly, homogeneous ethylene/α-olefin copolymers may be characterized by one or more methods known to those of skill in the art, such as molecular weight distribution (Mw/Mn), composition distribution breadth index (CDBI), and narrow melting point range and single melt point behavior.

A homogeneous ethylene/α-olefin copolymer can, in general, be prepared by the copolymerization of ethylene and any one or more α-olefin. Preferably, the α-olefin is a C₃-C₂₀ α-mono-olefin, more preferably, a C₄-C ₁₂ α-mono-olefin, still more preferably, a C₄-C₈ α-mono-olefin. Still more preferably, the α-olefin comprises at least one member selected from the group consisting of butene-1, hexene-1, and octene-1. Most preferably, th e α-olefin comprises octene-1, and/or a blend of hexene-1 and butene-1.

Processes for preparing homogeneous polymers are disclosed in US 5,206,075, US 5,241,031, and WO 93/03093. Further details regarding the production and use of one genus of homogeneous ethylene/α-olefin copolymers are disclosed in WO 90/03414. Still another genus of homogeneous ethylene/α-olefin copolymers is disclosed in US 5,272,236, and US 5,278,272.

As used herein, the phrases "ethylene/α-olefin copolymers", "ethylene/α-olefin copolymers" refer to such heterogeneous materials as linear low density polyethylene (LLDPE), linear medium density polyethylene (LMDPE) and very low and ultra low density polyethylene (VLDPE and ULDPE); and homogeneous polymers such as metallocene catalyzed polymers such as EXACT^{®} materials supplied by Exxon, AFFINITY^{®} and ENGAGE^{®} materials supplied by Dow, LUFLEXEN^{®} materials supplied by BASF and TAFMER^{®} materials supplied by Mitsui Petrochemical Corporation. These materials generally include copolymers of ethylene with one or more comonomers selected from C₄ to C₁₀ α-olefins such as butene-1, hexene-1, octene-1, etc..

As used herein, the term "modified polyolefin" is inclusive of modified polymer prepared by copolymerizing the homopolymer of the olefin or copolymer thereof with an unsaturated carboxylic acid, e.g., maleic acid, fumaric acid or the like, or a derivative thereof such as the anhydride, ester or metal salt or the like; as well as of modified polymer obtained by incorporating, into the olefin homopolymer or copolymer, an unsaturated carboxylic acid, e.g. maleic acid, fumaric acid, or the like, or a derivative thereof such as the anhydride, ester or metal salt or the like. Examples of said modified polyolefins are graft copolymers of maleic acid or anhydride onto ethylene/α-olefin copolymers, graft copolymers of fused ring carboxylic anhydrides onto polyethylene, resin mixtures of these and mixtures with polyethylene or ethylene/α-olefin copolymers.

As used herein, the term "ethylene-acrylic acid and ethylene-methacryilic acid copolymers" refers to copolymers of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerised therein, an alkyl (meth)acrylate, such as n-butyl acrylate or methacrylate or isobutyl acrylate or methacrylate. Said copolymer can be in the free acid form as well as in the ionized or partially ionized form wherein the neutralizing cation can be any suitable metal ion, e.g. an alkali metal ion, a zinc ion or other multivalent metal ions; in this latter case the copolymer is also termed "ionomer".

As used herein, the term "ethylene-vinyl acetate copolymer" or "EVA" is intended to refer to a copolymer formed from ethylene and vinyl acetate monomers wherein the ethylene derived units in the copolymer are present in major amounts; preferably between about 60% and 98% by weight and the vinyl acetate derived units in the copolymer are present in minor amounts, preferably between about 2% and about 40% by weight.

As used herein, the term "ethylene-alkyl (meth)acrylate copolymers" refers to copolymers of ethylene with alkyl (meth)acrylates, e.g. methyl (meth)acrylate, butyl (meth)acrylate, and iso-butyl (meth)acrylate wherein the ethylene derived units in the copolymer are present in major amounts and the alkyl (meth)acrylate derived units in the copolymer are present in minor amounts, preferably between about 2% and about 28% by weight.

As used herein, the term EVOH refers to saponified products of ethylene-vinyl ester copolymers, generally of ethylene-vinyl acetate copolymers, wherein the ethylene content is typically comprised between 20 and 60% by mole and the degree of saponification is generally higher than 85% preferably higher than 95%.

As used herein, the term polyamide refers to both polyamides and copolyamides. This term specifically includes those aliphatic polyamides or copolyamides commonly referred to as e.g. polyamide 6 (homopolymer based on e-caprolactam), polyamide 66 (homopolycondensate based on hexamethylene diamine and adipic acid), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on hexamethylenediamine and adipic acid and ε-caprolactam), polyamide 66/610 (polyamide copolymers based on hexamethylenediamine, adipic acid and sebacic acid), modifications thereof and blends thereof. Said term also includes crystalline or partially crystalline, aromatic or partially aromatic, polyamides.

As used herein, the term polyester refers to both polyesters and copolyesters. Suitable linear homopolymeric polyesters include poly(ethylene terephtahlate), poly(1,2-propylene terephthalate), poly(ethylene 2,5-dimethyl-terephthalate), poly(butylenes terphthalate), poly(ethylene isophthalate), poly(ethylene 5-t-butyl-isophthalate), poly(butylenes 2,6-naphthalate), and the like homopolymers. Suitable copolymers can be random copolymers, i.e. those copolymers where the various components are randomly incorporated into the copolymer chain; alternating or patterned copolymers, i.e. those copolymers whose constituent units stand in a regular pattern of succession along the molecular chains; or block or segmented copolymers. Examples of dicarboxylic acids that can be included in the copolyester resin are terephthalic acid, isophthalic acid, 2,5-dimethyl-terephthalic acid, 5-t-butyl-isophthalic acid, naphthalene dicarboxylic acid, cyclohexane-dicarboxylic acid, diphenyl ether di-carboxylic acid, sebacic acid, adipic acid, azelaic acid, and the like acids. Examples of diols that can be included in the copolyester resins are ethylene glycol, 1,2-propane-diol, 1,3-propane-diol, 1,4-butanediol, 1,6-hexane-diol, 1,4-cyclohexane-dimethanol, 2,2-bis(4-hydroxyphenyl)propane, and the like.

### DETAILED DESCRIPTION OF THE INVENTION

The multilayer heat-shrinkable asymmetrical film according to the present invention *inter alia* comprises the following layers:
- an outer sealing layer (C);
- an inner barrier layer (A); and
- an outer skin layer (D).

Preferably, the sealing layer (C) comprises a heat-sealable polyolefin which in turn comprises a single polyolefin or a blend of two or more polyolefins such as polyethylene or polypropylene or a blend thereof.

According to preferred embodiments of the invention, the sealing layer further comprises at least one antifog additive and, if desired, a plasticiser.

The barrier layer (A) comprises EVOH sandwiched between two polyamide layers (A').

Said polyamide layers A' comprise the same or different, preferably the same, polyamide, preferably selected from the group consisting of copolyamides 6/12, copolyamides of polyamide 6 and a partially aromatic polyamide and ternary copolyamides based on polyamide 6, polyamide 11, polyamide 66 or blends thereof; more preferably selected from the group consisting of polyamide 6, polyamide 6 copolymers comprising less than 5% of an aromatic co-monomer (modified polyamide 6), polyamide 66, polyamides 6/66, polyamides 6/12 or blends thereof; most preferably said polyamide is selected from the group consisting of polyamide 6, modified polyamide 6, polyamide 66 or blends thereof.

The skin layer (D) comprises a blend of between 90% to 60% by weight of polyamide and between 10% to 40% by weight of polyester, preferably said blend comprises between 85% to 75% by weight of polyamide and between 15% to 25% by weight of polyester.

According to the most preferred embodiment of the invention, the blend of the skin layer comprises 80% by weight of polyamide and 20% by weight of polyester.

The skin layer (D) comprises at least 50% by weight, preferably at least 80%, more preferably at least 90%, most preferably at least 95% of the blend of polyamide and polyester as defined above.

Said polyamide has a melting temperature higher than 170°C, preferably higher than 200°C and more preferably from 210°C to 250°C, in order to provide high mechanical strength, high thermal resistance, and easy welding properties of the film.

The skin layer (D) comprises a polyamide selected from the group consisting of copolyamides 6/12, copolyamides of polyamide 6 and a partially aromatic polyamide and ternary copolyamides based on polyamide 6, polyamide 11, polyamide 66 or blends thereof.

Preferably the skin layer comprises a polyamide selected from the group consisting of polyamide 6, polyamide 6 copolymers comprising less than 5% of an aromatic co-monomer (modified polyamide 6), polyamide 66, polyamides 6/66, polyamides 6/12 or blends thereof.

More preferably said polyamide is selected from the group consisting of polyamide 6, modified polyamide 6, polyamide 66 or blends thereof.

The polyester of the blend of the skin layer is preferably selected from the group consisting of polyethylene terephthalate (PET), glycol modified polyethylene terephthalate (PETG) or blends thereof.

According to the most preferred embodiment of the invention, the skin layer comprises a blend of 80% by weight of polyamide 6 and 20% by weight of PET.

The film according the present invention further comprise a tie layer (B) between the inner barrier layer (A) and the outer skin layer (D) and between the inner barrier layer (A) and the outer sealing layer (C).

In the film of the present invention the tie layers may have the same or a different composition.

Tie layers typically comprise a modified polyolefin or preferably a blend of a modified polyolefin with a polyolefin, such as for instance a blend of an acid or anhydride modified EVA with EVA or LLDPE.

Preferably, the tie layers of the invention comprise an adhesive polymer selected from ethylene copolymers or terionomers modified with maleic anhydride, or an EVA/ethylene methacrylic acid copolymer.

The film according to the present invention is an asymmetrical multilayer film having the structure C/B/A'/A/A'/B/D; preferred structures are C/B/A'/A/A'/B/D in which both A' layers comprise the same polyamide and both B layers comprise the same tie.

The multilayer heat-shrinkable asymmetrical film according to the present invention has a skeleton which during tray lidding with conventional equipment remains unbroken when the width of the skeleton is as narrow as 15 mm for each lateral edge of the film in the direction perpendicular to the axial direction of the film.

This implies good properties of mechanical resistance of the film.

The films of the present invention are obtained by coextrusion of the resins and/or blends of resins of the various layers through an extrusion die, preferably a round die, quickly followed by quenching at room temperature.

In this way a thick tube or a sheet is obtained which is then optionally cross-linked. Said cross-linking is preferably carried out by irradiation with high energy electrons at a suitable dosage level between 10 and 120 kGrays, and preferably between 20 and 90 kGrays.

Subsequently, the tube or sheet is heated to the orientation temperature, generally between about 60°C and about 125°C, by passing it through a hot air tunnel or an IR oven and then it is mono- or bi-axially stretched.

If a round extrusion die is employed in the coextrusion step, the stretching step is generally carried out by the so-called trapped bubble technique. In this technique the inner pressure of a gas, such as air, is used to expand the diameter of the thick tube obtained from the extrusion in order to give a larger bubble transversely stretched, and the differential speed of the mechanical means holding the bubble is used to get the longitudinal stretching. Generally the stretching ratio is of at least 2.5:1 in each direction.

Alternatively, when a flat die is used in the coextrusion step, the orientation is carried out by means of a sequential orientation technique or, preferably, by simultaneous tenter frame.

The orientation temperature is the temperature at which it is possible to obtain the orientation of the structure of the film under stable bubble condition.

Control of the film shrink force is then obtained by subjecting the film obtained by the above method to a heat treatment, generally known as "annealing", under strictly controlled conditions. In particular such a heat treatment involves heating the film to a suitable temperature preferably between 70°C and 150°C, more preferably between 90°C and 130°C for a time at least sufficient to induce a certain decrease of the shrink properties of the film to a value not exceeding 0.35 N/cm, but not long enough to substantially affect the film % free shrink at 120°C, and then cool it down to room temperature or below.

The heat treatment might be carried out off-line, but preferably it is performed on the line of all other processing operations, and any annealing technique known in the art may be employed, suitably choosing the temperature in the above range and setting the annealing time to meet the above objective.

In particular such a heat treatment may be part of the overall process or be a step added thereto.

In the former case the annealing may be obtained, for instance, by using the "triple bubble" technology. In the triple bubble technology first a bubble is extruded downward into a water quench, then the tube is reheated and inflated in an orienting station ("second bubble") and finally it goes to an annealing station ("third bubble").

In the latter case, before being wound up, the film obtained from the solid state orientation step, either as a flattened tubular film or as a mono-ply film, is conveyed to a conventional annealing station and heated to the suitably selected temperature.

The films according to the present invention are preferably manufactured according to the triple bubble process. The triple bubble process is a known process and, for a detailed description of all the parameters of the process, reference is made to WO 2007/099214.

In a preferred practical embodiment, between the second and the third bubble, at least one heating treatment (named stabilization treatment) wherein the heating temperature is between 35°C and 65°C, preferably between 40°C and 60°C, and more preferably at about 50°C is carried out for a period of time between 0.1 s and 7.5 s, preferably between 0.5 s and 5 s, and more preferably between 0.5 s and 3 s.

Preferably said heating treatment is carried out by immersing the film in a warm water bath.

The annealed films obtained by any of the above described processes may then be subjected to conventional after treatments for example exposure to a corona discharge treatment to improve the bonding and print-receptive characteristics of the film surface.

An additional object of the present invention is a product packaged with a film according to the above wherein the outer sealing layer is in contact with the packaged product.

A further object of the present invention is the use of a multilayer heat-shrinkable asymmetrical film as described above in tray lidding applications, preferably in inside cut tray lidding applications.

As mentioned before, in this type of technology, the film is firstly cut in the desired size and then welded onto the tray. Therefore it is of primary importance to avoid curling phenomena since if the curling occurs, the cut film does not seal the tray suitably.

The film of the present invention may be used either as a film, or in the form of a bag or pouch, or as a tubing to form a package in a conventional manner.

The film may be obtained as a tubular film and, if desired, individual bags are formed by transverse sealing and cutting across the flattened tubular film. Alternatively bags can be made by slitting the tubular film along one edge and then transversely sealing and severing the film to produce bags. Other methods of making bags and packages are known and may be readily adapted to use with the multilayer films of the invention.

The thickness of the film according to the present invention is not a critical parameter. Generally, however, for use in food packaging, a thickness in the range of from about 10 µm to about 120 µm, preferably from about 15 µm to about 70 µm, and more preferably of from about 20 µm to about 50 µm, is employed.

### EXAMPLES

The present invention will now be described in more details with particular reference to the following examples.

The following multilayer heat-shrinkable asymmetrical films were prepared with the triple bubble process (orientation temperature: 77-78°C, orientation ratios of about 2.80 : 1 in the longitudinal direction and about 3.40:1 in the transversal direction):

### Keys:

VLDPE: AFFINITY PL 1845G (Dow) - Ethylene/Octene Copolymer Linear, Single Site, Density 0.91 g/cm³ - Melt Flow Rate 190°C/02.16 kg 3.5 g/10 min
MB AF1: Masterbatch antifog - 94% Linear Low Density (LLDPE) Polyethylene, Linear Low Density Ethylene/Octene Copolymer Linear, Ziegler/Natta, DOWLEX 2045S DOW, 4-5% AntiFog Ethoxylated Fatty Alcohol POE 4 Lauryl Alcohol (Dodecyl)
Tie (Coextrusion Adhesive) Maleic Anhydride-Modified Ethylene/Octene Copolymer ADMER AT 2146E Mitsui Chemical, Density Standard (023°C) 0.915 g/cm3, Melt Flow Rate 190°C/02.16 kg 1.3 g/10 min
PA1: Ultramid B40 (BASF) - Polyamide (Nylon) Polyamide - 6 Poly(caprolactam), Density 1.1300 g/cm³ Melting point 220.0°C
PA2: Grivory G21 Natural (EMS-Grivory) - Polyamide (Nylon) Polyamide, Amorphous Poly(hexamethylenediamine/isophthalic acid/terephthalic acid, Density 1.1800 g/cm³ Glass Transition 125°C Refractive Index 1.58
EVOH: SOARNOL AT4403 (Nippon Gohsei), Ethylene/Vinyl Alcohol Copolymer Hydrolyzed Ethylene/Vinyl Acetate Copolymer, Comonomer content Ethylene 44% Crystallization point 144°C Density 1.14 g/cm^{3,} Melt Flow Rate 210°C/02.16 kg 3.5 g/10 min Melting point 164°C;
MB AB (PA6): GRILON MB 3361 FS Natural (EMS-Grivory), Masterbatch AntiBlock and Slip in Polyamide - 6
PP1: ADSYL 5C37F (LyondellBasell Industries), Polypropylene, Propylene/Ethylene/Butene Copolymer, Comonomer content Ethylene 3.3% Density 0.899 g/cm³ Melt Flow Rate 230°C/02.16 kg 5.5 g/10 min Melting point 135°C
MB AF2: Masterbatch antifog mPE based - 94% Linear Low Density (LLDPE) Polyethylene, Linear Low Density Ethylene/Octene Copolymer Branched, Single Site, Density 0.902 g/cm³, Melt Flow Rate 190°C/02.16 kg 1.1 g/10 min, Melting point 99°C, 4-5% AntiFog Ethoxylated Fatty Alcohol POE 4 Lauryl Alcohol (Dodecyl)
PP2: ADFLEX X500 F (LyondellBasell Industries), Polypropylene, Propylene/Ethylene/Butene Copolymer, Density 0.89 g/cm³ Melt Flow Rate 230°C/02.16 kg 7.5 g/10 min
PP3: VERSIFY 2200 PLASTOMER (DOW) - Polypropylene Copolymer Polypropylene, Propylene/Ethylene Copolymer Single Site, Density 0.876 g/cm³ Melt Flow Rate 230°C/02.16 kg 2.0 g/10 min
PP4: VERSIFY 3000 (Dow) - Polypropylene, Propylene/Ethylene Copolymer Single Site, Comonomer content Ethylene 5.2% Density 0.891 g/cm³ Melt Flow Rate 230°C/02.16 kg 8.0 g/10 min Melting point112°C
PET: Eastapack Copolyester 9921 (Eastman Chemical) Density 1.4 g/cm³ Melting point 255°C

### FILM I

layer C (7 µm): VLDPE 50%, MB AF1 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 77°C

### FILM II

layer C (7 µm): VLDPE 50%, MB AF1 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 99°C

### FILM III

layer C (7 µm): VLDPE 50%, MB AF1 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 58%, PET 40%, MB AB (PA6) 2%
stabilization temperature 54°C
annealing temperature 77°C

### FILM IV

layer C (7 µm): PP1 50%, MB AF2 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6)2%
stabilization temperature 54°C
annealing temperature 104°C

### FILM V

layer C (7 µm): PP2 50%, MB AF2 50%,
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 82°C

### FILM VI

layer C (7 µm): PP2 50%, MB AF2 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 104°C

### FILM VII

layer C (8 µm): PP2 50%, MB AF2 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 104°C

### FILM VIII

layer C (7 µm): PP2 30%, MB AF2 70%
layer B (2 µm): tie
layer A' (4 µm): PA1 90%, PA2 10%
layer A (2 µm): EVOH
layer A' (4 µm): PA1 90%, PA210%
layer B (2 µm): tie
layer D (4 µm): PA1 78%, PET 20%, MB AB (PA6) 2%
stabilization temperature 54°C
annealing temperature 82°C

### FILM IX

layer C (7 µm): PP2 30%, MB AF2 70%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 104°C

### FILM X

layer C (7 µm): PP3 30%, MB AF2 70%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 82°C

### FILM XI

layer C (7 µm): PP3 30%, MB AF2 70%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 104°C

### FILM XII

layer C (7 µm): PP3 50%, MB AF2 50%
layer B (2 µm): tie
layer A' (4 µm): PA1 90%, PA2 10%
layer A (2 µm): EVOH
layer A' (4 µm): PA1 90%, PA210%
layer B (2 µm): tie
layer D (4 µm): PA1 78%, PET 20%, MB AB (PA6) 2%
stabilization temperature 54°C
annealing temperature 82°C

### FILM XIII

layer C (7 µm): PP3 50%, MB AF2 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 54°C
annealing temperature 104°C

### FILM XIV

layer C (7 µm): PP3 50%, MB AF2 50%
layer B (2 µm): tie
layer A' (4 µm): PA1 90%, PA2 10%
layer A (2 µm): EVOH
layer A' (4 µm): PA1 90%, PA210%
layer B (2 µm): tie
layer D (4 µm): PA1 78%, PET 20%, MB AB (PA6) 2%
stabilization temperature 64°C
annealing temperature 82°C

### FILM XV

layer C (7 µm): PP3 50%, MB AF2 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 64°C
annealing temperature 93°C

### FILM XVI

layer C (7 µm): PP4 50%, MB AF2 50%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 64°C
annealing temperature 82°C

### FILM XVII

layer C (7 µm): PP4 30%, MB AF2 70%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 64°C
annealing temperature 82°C

### FILM XVIII

layer C (7 µm): PP3 30%, MB AF2 70%
layer B (2 µm): tie
layer A' (4 µm): PA1 90%, PA2 10%
layer A (2 µm): EVOH
layer A' (4 µm): PA1 90%, PA2 10%
layer B (2 µm): tie
layer D (4 µm): PA1 78%, PET 20%, MB AB (PA6) 2%
stabilization temperature 64°C
annealing temperature 82°C

The results obtained on the above mentioned examples are reported in the following table 1:

**Table 1**

| Films | Curl | Machinability | | Skeleton | Hermeticity | Pack appearance | Optics | Haze | Gloss |
|---|---|---|---|---|---|---|---|---|---|
| | | Outside cut | Inside cut | (15 mm) | (mbar) | | | (%) | (gu) |
| I | 2 | good | good | good | 55-60 | good | good | 6.0 | 128 |
| II | 1 | good | good | good | 56-60 | good | good | 5.8 | 130 |
| III | 2 | good | good | fair | 50-55 | fair | poor | 15.5 | 102 |
| IV | 1 | good | good | good | 52-58 | good | good | 5.3 | 130 |
| V | 2 | good | good | fair | 53-58 | good | good | 5.5 | 130 |
| VI | 1 | good | good | good | 55-60 | good | good | 5.7 | 128 |
| VII | 1 | good | good | good | 55-60 | good | good | 6.0 | 125 |
| VIII | 2 | good | good | fair | 53-58 | good | good | 6.1 | 128 |
| IX | 1 | good | good | good | 55-58 | good | good | 5.8 | 125 |
| X | 2 | good | good | fair | 58-61 | good | good | 6.3 | 126 |
| XI | 1 | good | good | good | 58-60 | good | good | 6.0 | 125 |
| XII | 2 | good | good | fair | 55-59 | good | good | 6.3 | 128 |
| XIII | 1 | good | good | good | 56-60 | good | good | 6.0 | 126 |
| b | 1 | good | good | weak | 59-61 | fair | hazy | 11.1 | 107 |
| c | 3 | good | fair | weak | 47-51 | fair | good | 5.5 | 140 |
| d | 5 | good | poor | weak | 50-55 | good | good | 6.1 | 130 |

Film b - comparative - same as "film II", but layer D composition is: PA1
   18% - PET 80% - MB AB (PA6) 2%
Film c - comparative - same as "film II", but layer D composition is: PET 100%
Film d - comparative same as "film II", but layer D composition is: PA1 98% - MB AB (PA6) 2%

Curl rating was based on a subjective observation of each film's tendency to curl or lay flat when placed on a flat surface at room temperature; a scale of 1 to 5 was used with "1" indicating excellent flatness and "5" indicating highly problematic curling.

Machinability tests were carried out with both outside cut and inside cut machines. The results were visually evaluated.

Skeleton tests were carried out with a skeleton of 15 mm for each lateral edge of the film in a direction perpendicular to the axial direction of the film. The results were visually evaluated. Good means no breaks, fair very few brakes and weak several breaks.

Hermeticity was measure in mbar according to this internal test, on 100 packages wherein a film according to the present invention was used as tray lidding on suitable polypropylene and/or polyethylene sealant rigid trays. The packages were then introduced in a closed water tank. Vacuum was created in the headspace of the water tank and the value of the pressure (mbar) inside the tank when bubbles start to escape the closed package was recorded. Values higher than 30 mbar are acceptable.

Pack appearance was visually evaluated. A fair pack appearance means the absence of wrinkles in the film.

Optics results are referred to the transparency of the film and were visually evaluated.

Haze was measured according to ASTM D1003.

Gloss was measured according to ASTM D2457.

As shown in the above results, the films according to the present invention show absence of curling, a good machinability in both types of machines; a significant skeleton strength at the tested width; have good hermeticity properties, good pack appearance, optics, haze and gloss properties.

## Claims

1. A multilayer heat-shrinkable asymmetrical film consisting of the following layers:
- an outer sealing layer;
- a tie layer;
- an inner barrier layer comprising EVOH sandwiched between two polyamide layers;
- a tie layer; and
- an outer skin layer comprising at least 50% by weight of a blend of between 90% to 60% by weight of at least one polyamide and between 10% to 40% by weight of at least one polyester,
wherein said polyamide has a melting temperature higher than 170°C and wherein said polyamide is selected from the group consisting of polyamides 6/12, copolyamides of polyamide 6 and a partially aromatic polyamide and ternary copolyamides based on polyamide 6, polyamide 11, polyamide 66 or blends thereof, preferably from the group consisting of polyamide 6, polyamide 6 copolymers comprising less than 5% of an aromatic co-monomer (modified polyamide 6), polyamide 66, polyamides 6/66, polyamides 6/12 or blends thereof.

2. Film according to claim 1 wherein the sealing layer comprises a single polyolefin or a blend of two or more polyolefins, preferably selected among polyethylene and polypropylene.

3. Film according to anyone of the previous claims wherein the skin layer comprises a blend of between 85% to 75% by weight of polyamide and between 15% to 25% by weight of polyester, preferably the blend comprises 80% by weight of polyamide and 20% by weight of polyester.

4. Film according to anyone of the previous claims wherein the skin layer comprises at least 80%, 90%, 95% of the blend according to claims 1 or 3.

5. Film according to anyone of the previous claims wherein the blend of the skin layer comprises a polyamide with a melting temperature higher than 200°C, preferably comprised between 210°C and 250°C.

6. Film according to anyone of the previous claims wherein the skin layer comprises a polyamide selected from the group consisting of polyamide 6, modified polyamide 6, polyamide 66 or blends thereof.

7. Film according to anyone of the previous claims wherein the blend of the skin layer comprises a polyester selected from the group consisting of PET, PETG or blends thereof.

8. Film according to anyone of the previous claims wherein the skin layer comprises a blend of 80% by weight of polyamide 6 and 20% by weight of PET.

9. Film according to anyone of the previous claims manufactured according to a triple bubble process.

10. Film according to claim 9 wherein the triple bubble process comprises at least one additional heating treatment, between the second and the third bubble, wherein the heating temperature is between 35°C and 65°C, preferably between 40°C and 60°C, and more preferably at 50°C.

11. Film according to claim 10 wherein said additional heating treatment is carried out for a period of time comprised between 0.1 s and 7.5 s, and preferably between 0.5 s and 5 s, and more preferably between 0.5 s and 3 s.

12. A product packaged with a film according to any of the previous claims wherein the outer sealing layer is in contact with the packaged product.

13. A package formed with the film according to anyone of claims 1 to 11 in which said film is used in tray lidding applications, or in the form of a bag, a pouch or a tubing.

14. Use of a multilayer heat-shrinkable asymmetrical film as in anyone of claims 1 to 11 in tray lidding applications, preferably in inside cut tray lidding applications.

## Patentansprüche

1. Mehrschichtiger, wärmeschrumpfbarer, asymmetrischer Film, welcher aus den folgenden Schichten besteht:
- einer äußeren Siegelungsschicht;
- einer Verbindungsschicht;
- einer EVOH umfassenden inneren Barriereschicht, welche sandwichartig zwischen zwei Polyamidschichten eingefügt ist;
- einer Verbindungsschicht; und
- einer äußeren Hautschicht, welche wenigstens 50 Gew.-% einer Mischung aus 90 Gew.-% bis 60 Gew.-% wenigstens eines Polyamids und 10 Gew.-% bis 40 Gew.-% wenigstens eines Polyesters umfasst,
wobei das Polyamid eine Schmelztemperatur von mehr als 170° C aufweist und wobei das Polyamid aus der Gruppe ausgewählt ist, bestehend aus Polyamiden 6/12, Copolyamiden aus Polyamid 6 und einem teilaromatischen Polyamid und ternären Copolyamiden, basierend auf Polyamid 6, Polyamid 11, Polyamid 66 oder Mischungen davon, bevorzugt aus der Gruppe, bestehend aus Polyamid 6, Polyamid-6-Copolymeren, umfassend weniger als 5 % eines aromatischen Comonomers (modifiziertes Polyamid 6), Polyamid 66, Polyamiden 6/66, Polyamiden 6/12 oder Mischungen davon.

2. Film nach Anspruch 1, wobei die Dichtungsschicht ein einzelnes Polyolefin oder eine Mischung von zwei oder mehreren Polyolefinen umfasst, bevorzugt ausgewählt aus Polyethylen und Polypropylen.

3. Film nach einem der vorhergehenden Ansprüche, wobei die Hautschicht eine Mischung aus 85 Gew.-% bis 75 Gew.-% Polyamid und 15 Gew.-% bis 25 Gew.-% Polyester umfasst, wobei die Mischung bevorzugt 80 Gew.-% Polyamid und 20 Gew.-% Polyester umfasst.

4. Film nach einem der vorhergehenden Ansprüche, wobei die Hautschicht wenigstens 80 %, 90 %, 95 % der Mischung gemäß den Ansprüchen 1 oder 3 umfasst.

5. Film nach einem der vorhergehenden Ansprüche, wobei die Mischung der Hautschicht ein Polyamid mit einer Schmelztemperatur von mehr als 200° C umfasst, bevorzugt umfasst zwischen 210° C und 250° C.

6. Film nach einem der vorhergehenden Ansprüche, wobei die Hautschicht ein Polyamid umfasst, ausgewählt aus der Gruppe, bestehend aus Polyamid 6, modifiziertem Polyamid 6, Polyamid 66 oder Mischungen davon.

7. Film nach einem der vorhergehenden Ansprüche, wobei die Mischung der Hautschicht ein Polyester umfasst, ausgewählt aus der Gruppe, bestehend aus PET, PETG oder Mischungen davon.

8. Film nach einem der vorhergehenden Ansprüche, wobei die Hautschicht eine Mischung aus 80 Gew.-% Polyamid und 20 Gew.-% PET umfasst.

9. Film nach einem der vorhergehenden Ansprüche, welcher gemäß einem dreifachen Blasformverfahren hergestellt ist.

10. Film nach Anspruch 9, wobei das dreifache Blasformverfahren zwischen dem zweiten und dem dritten Blasformen wenigstens eine zusätzliche Wärmebehandlung umfasst, wobei die Erwärmungstemperatur zwischen 35° C und 65° C, bevorzugt zwischen 40° C und 60° C und besonders bevorzugt bei 50° C liegt.

11. Film nach Anspruch 10, wobei die zusätzliche Wärmebehandlung über einen Zeitraum ausgeführt wird, welcher zwischen 0,1 s und 7,5 s und bevorzugt zwischen 0,5 s und 5 s und besonders bevorzugt zwischen 0,5 s und 3 s umfasst ist.

12. Produkt, welches mit einem Film nach einem der vorhergehenden Ansprüche verpackt ist, wobei die äußere Dichtungsschicht in Kontakt mit dem verpackten Produkt ist.

13. Verpackung, welche mit dem Film nach einem der Ansprüche 1 bis 11 gebildet ist, bei welcher der Film in Schalen-Deckel-Anwendungen oder in der Form einer Tüte, eines Beutels oder eines Schlauchs verwendet wird.

14. Verwendung eines mehrschichtigen, wärmeschrumpfbaren, asymmetrischen Films wie in einem der Ansprüche 1 bis 11 in Schalen-Deckel-Anwendungen, bevorzugt in innen geschnittenen Schalen-Deckel-Anwendungen.

## Revendications

1. Film multicouche asymétrique thermo-rétractable constitué des couches suivantes :
- une couche d'étanchéité externe ;
- une couche de liaison ;
- une couche formant barrière interne comprenant de l'EVOH pris en sandwich entre deux couches de polyamide ;
- une couche de liaison ; et
- une pellicule externe comprenant au moins 50 % en poids d'un mélange compris entre 90 % à 60 % en poids d'au moins un polyamide et entre 10 % à 40 % en poids d'au moins un polyester,
ledit polyamide ayant une température de fusion supérieure à 170°C et ledit polyamide étant sélectionné dans le groupe constitué des polyamides 6/12, des copolyamides de polyamide 6 et d'un polyamide partiellement aromatique et de copolyamides ternaires à base de polyamide 6, polyamide 11, polyamide 66 ou leurs mélanges, préférablement à partir du groupe constitué du polyamide 6, des copolymères de polyamide 6 comprenant moins de 5 % d'un comonomère aromatique (polyamide 6 modifié), de polyamide 66, de polyamides 6/66, de polyamides 6/12 ou leurs mélanges.

2. Film selon la revendication 1 dans lequel la couche d'étanchéité comprend une polyoléfine unique ou un mélange de deux ou plusieurs polyoléfines, préférablement sélectionnées parmi le polyéthylène et le polypropylène.

3. Film selon l'une quelconque des revendications précédentes dans lequel la pellicule comprend un mélange compris entre 85 % à 75 % en poids de polyamide et entre 15 % à 25 % en poids de polyester, préférablement le mélange comprend 80 % en poids de polyamide et 20 % en poids de polyester.

4. Film selon l'une quelconque des revendications précédentes dans lequel la pellicule comprend au moins 80 %, 90 %, 95 % du mélange selon les revendications 1 ou 3.

5. Film selon l'une quelconque des revendications précédentes dans lequel le mélange de la pellicule comprend un polyamide avec une température de fusion supérieure à 200°C, préférablement comprise entre 210°C et 250°C.

6. Film selon l'une quelconque des revendications précédentes dans lequel la pellicule comprend un polyamide sélectionné dans le groupe constitué du polyamide 6, du polyamide 6 modifié, du polyamide 66 ou leurs mélanges.

7. Film selon l'une quelconque des revendications précédentes dans lequel le mélange de la pellicule comprend un polyester sélectionné dans le groupe constitué du PET, PETG ou leurs mélanges.

8. Film selon l'une quelconque des revendications précédentes dans lequel la pellicule comprend un mélange de 80 % en poids de polyamide 6 et de 20 % en poids de PET.

9. Film selon l'une quelconque des revendications précédentes fabriqué selon un procédé de soufflage triple.

10. Film selon la revendication 9, le procédé de soufflage triple comprenant au moins un traitement de chauffage additionnel, entre le second et le troisième soufflage, la température de chauffage étant comprise entre 35°C et 65°C, préférablement entre 40°C et 60°C, et plus préférablement à 50°C.

11. Film selon la revendication 10, ledit traitement de chauffage additionnel étant conduit sur une durée comprise entre 0,1 s et 7,5 s, et préférablement entre 0,5 s et 5 s, et plus préférablement entre 0,5 s et 3 s.

12. Produit emballé avec un film selon l'une quelconque des revendications précédentes dans lequel la couche d'étanchéité externe se trouve en contact avec le produit emballé.

13. Emballage formé du film selon l'une quelconque des revendications 1 à 11 dans lequel ledit film est utilisé dans des applications de pelliculage de barquettes, ou sous la forme d'un sac, d'une poche ou d'un tube.

14. Utilisation d'un film multicouche asymétrique thermo-rétractable selon l'une quelconque des revendications 1 à 11 dans des applications de pelliculage de barquettes, préférablement dans les applications de pelliculage de barquettes à découpe interne (inside cut).
